Europäisches Patentamt

European Patent Office

Office européen des brevets

(11) Veröffentlichungsnummer : **0 195 184**
**B1**

(12) # EUROPÄISCHE PATENTSCHRIFT

(45) Veröffentlichungstag der Patentschrift :
15.03.89

(21) Anmeldenummer : 86100528.8

(22) Anmeldetag : 17.01.86

(51) Int. Cl.⁴ : **B 23 B 31/16**

(54) **Spannbackenwechselvorrichtung.**

(30) Priorität : **22.03.85 DE 3510457**

(43) Veröffentlichungstag der Anmeldung :
**24.09.86 Patentblatt 86/39**

(45) Bekanntmachung des Hinweises auf die Patenterteilung : **15.03.89 Patentblatt 89/11**

(84) Benannte Vertragsstaaten :
**CH FR GB IT LI SE**

(56) Entgegenhaltungen :
**DE--A-- 3 425 603
DE--A-- 3 425 609
FR--A-- 2 125 100**

(73) Patentinhaber : **Röhm, Günter Horst
Heinrich-Röhm-Strasse 50
D-7927 Sontheim (DE)**

(72) Erfinder : **Röhm, Günter Horst
Heinrich-Röhm-Strasse 50
D-7927 Sontheim (DE)**

(74) Vertreter : **Fay, Hermann, Dipl.-Phys. Dr.
Ensingerstrasse 21 Postfach 1767
D-7900 Ulm (Donau) (DE)**

## Beschreibung

Die Erfindung betrifft ein kraftbetätigtes Spannfutter mit radial verstellbaren Spannbacken, deren jede aus einer in einem Futterkörper geführten antreibbaren Grundbacke und einer an der Stirnfläche der Grundbacke angeordneten, an der Grundbacke auswechselbar befestigten Aufsatzbacke besteht und mindestens einen die Grundbacke und die Aufsatzbacke verbindenden Zapfen mit zur Futterachse paralleler Zapfenachse aufweist.

Bei einem in der nicht vorveröffentlichten DE-A-34 25 609.1 beschriebenen Spannfutter dieser Art bildet der an der Aufsatzbacke feste Zapfen mit einer Zapfenaufnahme in der Grundbacke eine Steckverbindung, die durch in der Grundbacke verschiebbare Riegelteile geschlossen und verriegelt werden kann, wobei für die Riegelteile Stellantriebe im Futterkörper vorgesehen sind. Solche Zapfenverbindungen sind nicht nur bezüglich der Riegelteile konstruktiv aufwendig und für einen automatischen Spannbackenwechsel umständlich zu betätigen, sondern sie ermöglichen auch kein radiales Umsetzen der Aufsatzbacken auf den Grundbacken, wie dies bei einem in der ebenfalls nicht vorveröffentlichten DE-A-34 25 603.2 beschriebenen Spannfutter der Fall ist, bei dem die Grundbacke und die Aufsatzbacke in einer Verzahnung mit quer zur Führungsrichtung der Grundbacke verlaufenden Zahnleisten im gegenseitigen Eingriff stehen und die Aufsatzbacke in der Verzahnung radial längs der Grundbacke versetzbar ist. Hier wird der automatische Spannbackenwechsel dadurch ermöglicht, daß die an ihrer Stirnseite die Verzahnung tragende Grundbacke einen in ihrer Führungsrichtung verlaufenden, zur Aufsatzbacke hin offenen Schlitz und die Aufsatzbacke ein in den Schlitz greifendes und darin längsverschiebbares Stollenstück aufweist, das an mindestens einer seiner beiden Seitenflächen mindestens eine in Längsrichtung des Schlitzes verlaufende Riegelschulter aufweist, und daß in der Grundbacke ein verstellbares Riegelstück mit einem Riegelkopf vorgesehen ist, der aus einer am Stollenstück außer Eingriff stehenden Entriegelungsstellung quer zur Führungsrichtung der Grundbacke auf die Riegelschulter aufschiebbar ist, wobei der Riegelkopf und die Riegelschulter aneinander in einer gegen die Aufschiebrichtung geneigten Riegelfläche anliegen, über die der sich auf die Riegelschulter aufschiebende Riegelkopf das Stollenstück in den Schlitz hineinzieht. Das Riegelstück steht in Verstellrichtung gegen das Stollenstück unter der Kraft einer Verriegelungsfeder, und ein von außerhalb des Futters betätigbarer Stößel drückt das Riegelstück gegen die Kraft der Verriegelungsfeder in die Entriegelungsstellung. Auch derartige Lösungen lassen insbes. bezüglich der Riegelstücke und ihres Eingriffes in die Riegelaufnahme in konstruktiver und funktioneller Hinsicht zu wünschen übrig. Auch stört in allen Fällen die Tatsache, daß die Verbindung der Aufsatzbacke mit der Grundbacke und ihre Verspannung gegeneinander bauartbedingt immer mit nur einem einzigen Verbindungsglied, Zapfen oder Stollenstück, möglich ist, was zu nicht ausreichend form- und kraftsteifen Backenverbindungen führen kann, insbes. bei in Radialrichtung des Spannfutters großen und/oder relativ gegeneinander über einen größeren Bereich verstellbaren Grund- und Aufsatzbacken.

Der Erfindung liegt die Aufgabe zugrunde, ein Spannfutter der eingangs genannten Art so auszubilden, daß bei konstruktiv und montagetechnisch einfacher Bauform der automatische Backenwechsel in besonders einfacher Weise möglich ist, wobei durch die Bauform bedingt ein sicherer, besonders kraft- und formsteifer Sitz der Aufsatzbacke an der Grundbacke erzielt werden und die Aufsatzbacke auch an der Grundbacke im Prinzip radial versetzt werden kann.

Diese Aufgabe wird nach der Erfindung dadurch gelöst, daß der Zapfen mit seinem einen, ein Gewinde tragenden Zapfenende in einem Muttergewinde der Grundbacke geführt ist und am anderen Ende einen in einer Richtung quer zur Zapfenachse schmaleren, in der dazu senkrechten Richtung breiteren und eine über den Zapfenschaft auswärts vorstehende Riegelschulter bildenden Riegelkopf aufweist, der in eine Riegelaufnahme in der Aufsatzbacke greift, wobei der Riegelkopf in der dem Entriegelungszustand entsprechenden Drehlage des Zapfens axial in die Riegelaufnahme einsteckbar ist und in der dem Verriegelungszustand entsprechenden Drehlage mit seiner Riegelschulter eine in der Riegelaufnahme vorgesehene Hinterschneidung axial formschlüssig hinterfaßt, daß ferner der Zapfen in einem in der Grundbacke befindlichen Zapfenabschnitt eine Verzahnung nach Art eines Zahnritzels und ein quer zur Zapfenachse längsverschieblich in der Grundbacke geführter Stellbolzen eine mit der Verzahnung des Zapfens kämmende Querverzahnung nach Art einer Zahnstange aufweist, wobei die Länge des Stellbolzens höchstens gleich der Breite der Grundbacke in seiner Verschiebungsrichtung ist, und daß zum Verschieben des Stellbolzens im Futterkörper beidseits der Grundbacke mit dem Stellbolzen in seiner Verschiebungsrichtung fluchtende Stellstangen längsverschieblich geführt sind, die mittels im Futterkörper axial geführter und von außerhalb des Futterkörpers her gegen die Kraft von Rückstellfedern betätigbarer Stößel verstellbar sind und dazu über Keilgetriebe mit den Stößeln in Eingriff stehen.

Axiales Eindrücken der Stößel in den Futterkörper gegen die Kraft der Rückstellfedern führt daher zur Verschiebung des Stellbolzens und durch die damit verbundene Verdrehung des Zapfens zu einem Ver- oder Entriegeln der Aufsatzbacke, wobei bei einer Verdrehung des Zapfens in der dem Verriegeln entsprechenden Drehrichtung der Zapfen zufolge seines axialen Anzuges in seinem Muttergewinde die Aufsatzbacke gegen die Grundbacke verspannt, während sich gleichzeitig die Riegelschultern hinter die Hinterschneidungen in der Riegelaufnahme legen. Die zum Ver- und Entriegeln dienenden Stößel befinden sich im Futterkörper auf entgegengesetzten Seiten der Spannbacke, können also bezüglich ihrer Betätigung beim automatischen Backenwechsel nicht miteinander verwechselt werden. Im Verriegelungszustand liegen die Stellbolzen völlig innerhalb der Grundbacken, so daß sie die radiale Backenverstellung nicht behindern. Um im entriegelten Zustand radiale Verstellungen der Grundbacke und damit ein unbeabsichtigtes Anlaufen der Drehmaschine mit Sicherheit zu verhindern, besteht nach einem weiteren Vorschlag der Erfindung die Möglichkeit, daß in der dem Entriegelungszustand entsprechenden Drehstellung der Zapfen die Stellbolzen in die Führungen für die Stellstangen im Futterkörper vorstehen, so daß sie alle Bewegungen der Grundbacken blockieren. Im übrigen ermöglicht die erfindungsgemäße Verbindung der Grundbacke und Aufsatzbacke in einfacher Weise ein radiales Versetzen der Aufsatzbacke längs der Grundbacke, wenn beispielsweise die Grundbacke und die Aufsatzbacke in einer Verzahnung mit quer zur Führungsrichtung der Grundbacke verlaufenden Zahnleisten im gegenseitigen Eingriff stehen. Zu einer solchen Versetzbarkeit der Aufsatzbacke ist es nach der Erfindung nur erforderlich, daß die Riegelaufnahme von einer sich in Verstellrichtung der Aufsatzbacke an der Grundbacke erstreckenden Nut von T-förmigem Nutquerschnitt gebildet ist, wobei der querliegende Teil des Nutprofils den Riegelkopf aufnimmt und die Hinterschneidung der Riegelaufnahme bildet. Schließlich besteht in allen Fällen die weitere Möglichkeit, daß jede Spannbacke in der Verstellrichtung der Aufsatzbacke an der Grundbacke zwei mit Abstand nebeneinander angeordnete Zapfen aufweist, wobei für jeden Zapfen ein eigener Stellbolzen mit eigenen Stellstangen und Stößeln vorgesehen sein kann. Die doppelte Zapfenanordnung ermöglicht eine besonders form- und kraftsteife Verbindung der Aufsatzbacke mit der jeweiligen Grundbacke auch dann, wenn die Backen in ihrer radialen Verstellrichtung große Länge aufweisen oder die Aufsatzbacke über einen größeren Längenbereich an der Grundbacke radial versetzbar sein soll. Auch unter hohen Spannkräften ist dann ein Kippen der Aufsatzbacke gegenüber der Grundbacke ausgeschlossen.

Gegenstand der Erfindung ist auch eine für das beschriebene Spannfutter besonders vorteilhafte Backenwechselvorrichtung mit einem axial gegen die Stirnseite des Spannfutters verstellbaren Backenträger mit je einem Greifer für die Aufsatzbacken. Die Erfindung ist insoweit dadurch gekennzeichnet, daß der Backenträger zwei Arbeitsseiten mit je einem Satz Greifer für die Aufsatzbacken aufweist und wahlweise mit der einen oder anderen Arbeitsseite gegen die Futterstirnseite zustellbar ist, daß auf der einen Arbeitsseite nur Stifte zur Betätigung mit der dem Verriegeln dienenden Stößel jeweils an der einen Seite der Spannbacken und an der anderen Arbeitsseite nur Stifte zur Betätigung der dem Entriegeln der Zapfen dienenden Stößel an der anderen Seite der Spannbacken vorgesehen sind, und daß in Zustellrichtung des Backenträgers gegen das Spannfutter die Stifte jeweils starr, die Greifer gegen eine Rückstellkraft nachgiebig verschiebbar am Backenträger angeordnet sind. Dabei sind im übrigen die Stifte und Greifer in der Zustellrichtung des Backenträgers gegen die Futterstirnseite relativ zueinander so angeordnet, daß die Greifer den Stiften etwas vorauslaufen, beim Anschlagen der in den Greifern gehaltenen Aufsatzbacken an den Grundbacken aber sich gegen die Rückstellkraft am Backenträger zurückdrücken lassen, während der Backenträger selbst mit den Stiften noch weiter gegen das Spannfutter zugestellt wird, um den vollen Hub der Stößel zu bewerkstelligen. Der Vorteil des erfindungsgemäßen Backenträgers besteht darin, daß mit derselben Zustellbewegung des Backenträgers sowohl die Aufsatzbacken gehandhabt als auch die Stößel zur Ver- bzw. Entriegelung der die Aufsatzbacken mit den Grundbacken verbindenden Zapfen betätigt werden, wobei zum Entriegeln und Abnehmen der Aufsatzbacken von den Grundbacken die eine Arbeitsseite, zum Ansetzen und Verriegeln der Aufsatzbacken an den Grundbacken die andere Arbeitsseite des Backenträgers dient, und die auf der jeweiligen Arbeitsseite vorgesehenen Stifte nur die für die dieser Arbeitsseite zugeordnete Backenwechselfunktion bestimmten Stößel im Spannfutter betätigen können.

Im folgenden wird die Erfindung an einem in der Zeichnung dargestellten Ausführungsbeispiel näher erläutert ; es zeigen :

Fig. 1 einen Axialschnitt durch ein Spannfutter nach der Erfindung,

Fig. 2 einen Querschnitt durch das Spannfutter nach Fig. 1,

Fig. 3 eine Ansicht des Spannfutters nach Fig. 2 in Richtung des dort eingetragenen Pfeils III,

Fig. 4 einen Längsschnitt durch den Backenträger einer erfindungsgemäßen Backenwechselvorrichtung,

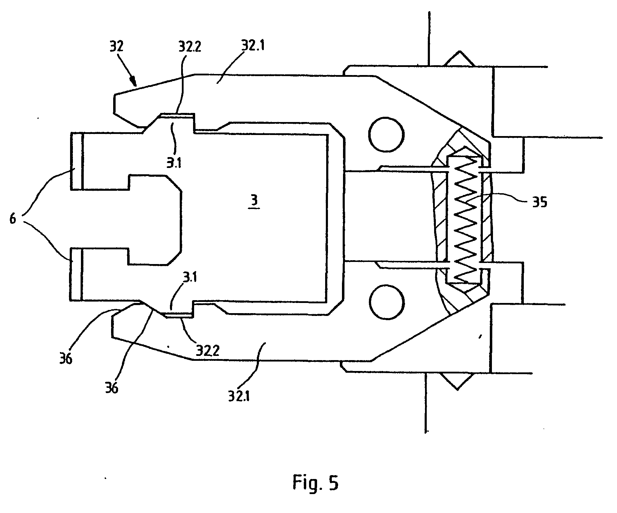

Fig. 5 einen Schnitt in Richtung V-V durch den Gegenstand der Fig. 4.

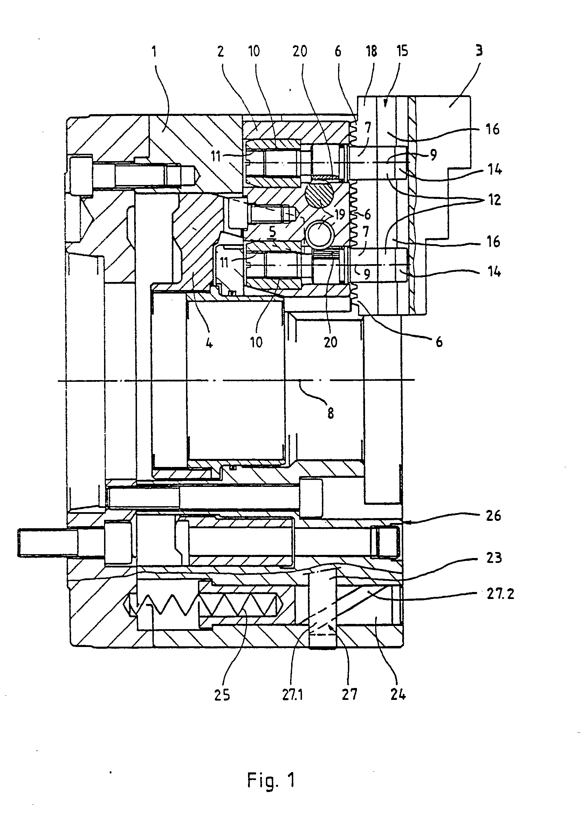

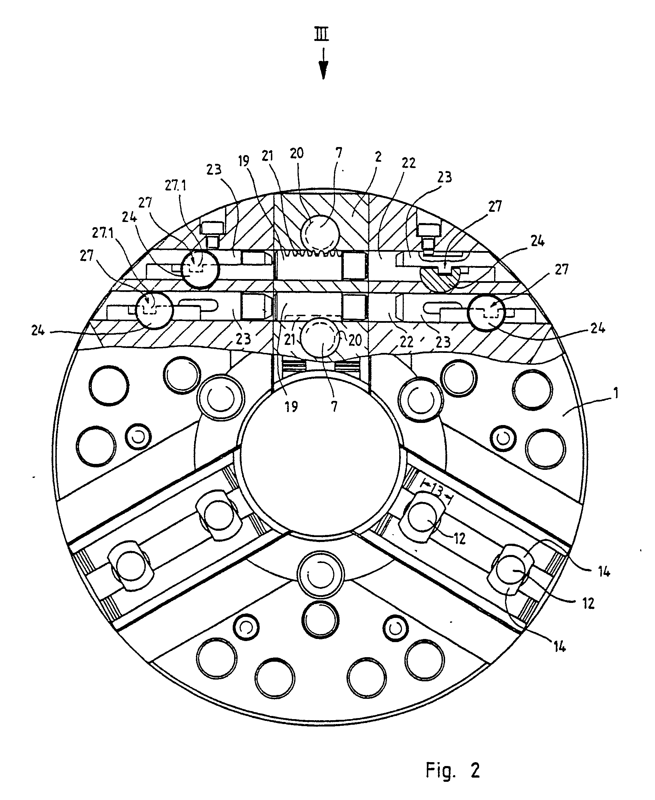

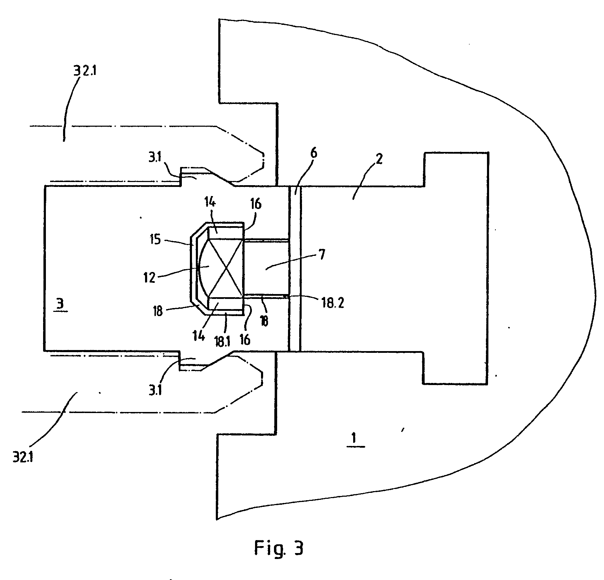

Das in den Fig. 1 bis 3 dargestellte kraftbetätigte Spannfutter besitzt radial verstellbare Spannbacken, deren jede aus einer in einem Futterkörper 1 geführten antreibbaren Grundbacke 2 und einer an der Stirnfläche der Grundbacke 2 angeordneten Aufsatzbacke 3 besteht. Der Antrieb der insgesamt drei Grundbacken 2 erfolgt mittels eines axial im Futterkörper 1 verstellbaren Antriebsgliedes 4 über eine Keilhakenverbindung 5 üblicher Art. Jedoch ist im Rahmen der Erfindung selbstverständlich auch jeder andere Stellantrieb für die Grundbacken 2 möglich. Die Aufsatzbacken 3 sind auswechselbar an den Grundbacken 2 befestigt, wobei die Grundbacken 2 und die Aufsatzbacken 3 jeweils in einer Verzahnung 6 mit quer zur Führungsrichtung der Grundbacken 2 verlaufenden Zahnleisten im gegenseitigen Eingriff stehen. Diese Verzahnung 6 befindet sich an den einander zugeordneten Stirnflächen sowohl an der Grundbacke 2 wie an der Aufsatzbacke 3. Die Aufsatzbacke 3 kann im von der Grundbacke 2 gelösten Zustand der Verzahnung radial längs der Grundbacke 2 versetzt und im versetzten Zustand wieder an der Grundbacke 2 befestigt werden, so daß im Ergebnis der Spanndurchmesser ohne entsprechenden Verstellhub der Grundbacken 2 in weiten Grenzen nach Wunsch geändert werden kann. Die Verbindung zwischen der Aufsatzbacke 3 und der Grundbacke 2 erfolgt durch zwei Zapfen 7 mit zur Futterachse 8 paralleler Zapfenachse 9. Diese Zapfen 7 sind in der Verstellrichtung der Aufsatzbacke 3 an der Grundbacke 3 mit Abstand nebeneinander angeordnet. Jeder Zapfen 7 ist mit seinem futterseitigen, ein Gewinde 10 tragenden Zapfenende in einem Muttergewinde 11 der Grundbacke 2 geführt. Am anderen Ende trägt der Zapfen 7 einen Riegelkopf 12, der in einer in Fig. 2 durch den Doppelpfeil 13 bezeichneten Richtung quer zur Zapfenachse 9 schmaler, in der dazu senkrechten Richtung aber breiter ist und in dieser Richtung über den Zapfenschaft auswärts vorstehende Riegelschultern 14 bildet. Der Riegelkopf 12 greift in eine in der Aufsatzbacke 3 vorgesehene Riegelaufnahme 15, wobei der Riegelkopf 12 in der dem Entriegelungszustand entsprechenden Drehlage des Zapfens 7 axial in die Riegelaufnahme 15 einsteckbar ist und in der dem Verriegelungszustand entsprechenden, um 90° gedrehten Drehlage mit seinen Riegelschultern 14 eine in der Riegelaufnahme 15 vorgesehene Hinterschneidung 16 axial formschlüssig hinterfaßt. Diese Riegelaufnahme 15 ist von einer sich in Verstellrichtung der Aufsatzbacke 3 an der Grundbacke 2 erstreckenden Nut 18 von T-förmigem Nutquerschnitt gebildet. Dabei bildet der querliegende Teil 18.1 des Nutprofils mit seinen zur Nutöffnung 18.2 hin liegenden Querwänden die Hinterschneidung der Riegelaufnahme 15, an welchen sich die Riegelschultern 14 axial formschlüssig anlegen, wenn der Zapfen 7 in dem Muttergewinde 11 aus der Entriegelungs- in die Verriegelungslage also um 90° um seine Zapfenachse 9 gedreht wird. Ferner besitzt jeder Zapfen 7 in einem in der Grundbacke 2 befindlichen Zapfenabschnitt eine Verzahnung 20 nach Art eines Zahnritzels. Ein quer zur Zapfenachse 9 längsverschieblich in der Grundbacke 2 geführter Stellbolzen 19 besitzt eine mit der Verzahnung 20 des Zapfens 7 kämmende Querverzahnung 21 nach Art einer Zahnstange, so daß die Verschiebung des Stellbolzens 19 in seiner Längsrichtung zu entsprechenden Drehbewegungen des Zapfens 7 führt. Die Länge des Stellbolzens 19 ist höchstens gleich der Breite der Grundbacke 2 in seiner Verschiebungsrichtung. Dabei sind die Verhältnisse so gewählt, daß sich der Stellbolzen 19 in der dem Verriegelungszustand entsprechenden Drehlage des Zapfens 7 vollständig innerhalb der Grundbacke 2 befindet, so daß die Grundbacke 2 unbehindert durch einen den Stellbolzen 19 radial im Futterkörper 1 verstellt werden kann. In der dem Entriegelungszustand entsprechenden Drehstellung der Zapfen 7 stehen dagegen die Stellbolzen 19 in die Führungen 22 für Stellstangen 23 im Futterkörper 1 vor, verhindern also radiale Verstellungen der Grundbacken 2, was über geeignete Sicherheitsschaltungen und -einrichtungen ein unbeabsichtigtes Anlaufen der Drehmaschine und damit des Spannfutters verhindern kann. Bezogen auf die radiale Führungsrichtung der jeweiligen Grundbacken 2 verläuft die Verschiebungsrichtung der Stellbolzen 19 senkrecht zu der genannten Backenführungsrichtung und senkrecht zur Futterachse 8. Zum Verschieben der Stellbolzen 19 zwischen der Ver- und Entriegelungsstellung dienen die im Futterkörper 1 beidseits der Grundbacke 2 angeordneten Stellstangen 23, die mit den Stellbolzen 19 in deren Verschiebungsrichtung fluchten und im Futterkörper 1 längsverschieblich geführt sind. Die Stellstangen 23 wiederum werden mit Hilfe von Stößeln 24 betätigt, die im Futterkörper 1 axial längsverschieblich geführt und von außerhalb des Futterkörpers 1, nämlich seiner die Spannbacken 2, 3 tragenden Stirnseite 26 her gegen die Kraft von Rückstellfedern 25 betätigt werden können. Die Stellstangen 23 und die Stößel 24 stehen jeweils paarweise über ein Keilgetriebe 27 miteinander im Eingriff. Dieses Keilgetriebe besteht im Ausführungsbeispiel aus einem an den Stellstangen 23 vorgesehenen Keilzahn 27.1 und einer im Stößel 24 vorgesehenen, den Keilzahn 27.1 aufnehmenden Keilnut 27.2. Jedenfalls vermittelt das Keilgetriebe 27 eine Umlenkung der Stößelbewegung um 90° in Richtung der Stellstangenführung und liefert zugleich über die Schräge des Keilzahns bzw. der Keilnut eine Übersetzung des Stellweg- und Stellkraftverhältnisses zwischen Stößel 24 und Stellstange 23. Für jeden der beiden Zapfen 7 je Grund- bzw. Aufsatzbacke 2, 3 sind eigene Stellstangen 23 und Stößel 24 vorgesehen. Die Betätigung der in Fig. 2 jeweils rechts jeder Spannbacke befindlichen Stößel 24 dient zum Verriegeln, die Betätigung der links jeder Spannbacke befindlichen Stößel 24 zum Entriegeln der Aufsatzbacken 3 an den Grundbacken 2.

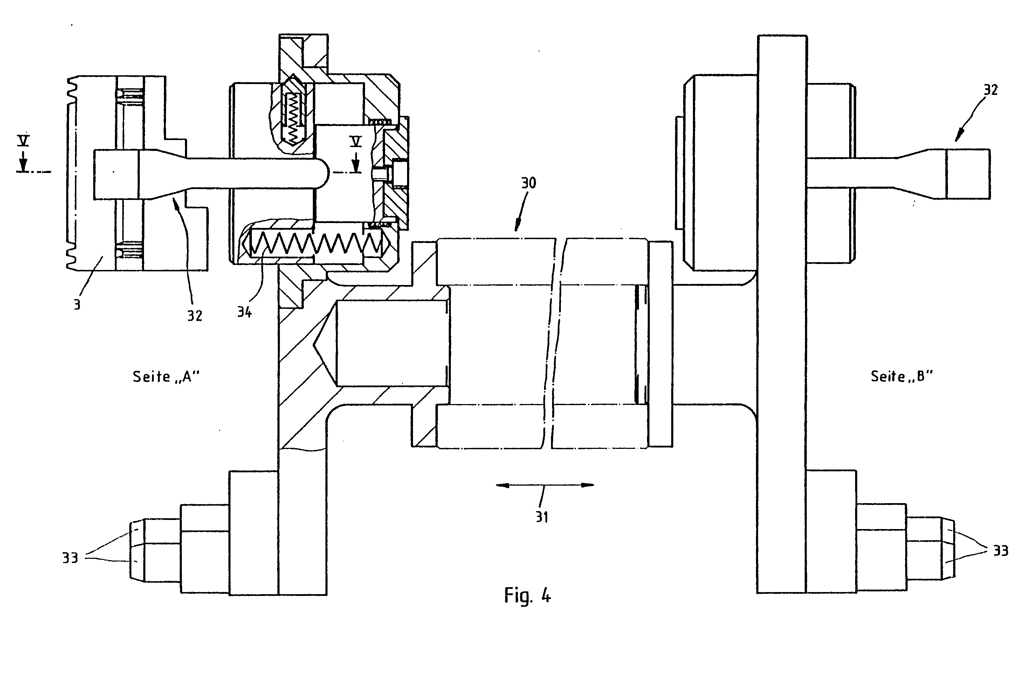

Zum automatischen Backenwechsel dient eine Backenwechselvorrichtung, von der in Fig. 4 nur der Backenträger 30 dargestellt ist, der in Richtung des Doppelpfeils 31 axial gegen die Stirnseite 26 des Spannfutters verstellbar ist und im Ausführungsbeispiel zwei voneinander um 180° abgewandte Arbeitsseiten A, B aufweist, sowie so verdrehbar ist, daß er wahlweise mit der einen Arbeitsseite A oder mit der anderen Arbeitsseite B gegen die Futterstirnseite 26 zugestellt werden kann. Der Backenträger 30 besitzt auf jeder Arbeitsseite A, B Greifer 32 für einen vollständigen Satz von im Ausführungsbeispiel jeweils drei Aufsatzbacken 3. Außerdem trägt er an jeder Arbeitsseite A, B Stifte 33 zur entsprechenden Betätigung der Stößel 24 im Spannfutter. Auf der in der Zeichnung mit B bezeichneten Arbeitsseite sind die Stifte 33 so angeordnet, daß sie zur Betätigung nur der dem Verriegeln der Zapfen 7

dienenden Stößel 24 jeweils auf der in Fig. 2 rechten Seite der Spannbacken in der Lage sind, während auf der anderen Arbeitsseite A des Backenträgers 30 die Stifte 33 nur so angeordnet sind, daß sie die dem Entriegeln der Zapfen 7 dienenden Stößel 24 an der in Fig. 2 linken Seite der Spannbacken betätigen können. Im übrigen sind in Zustellrichtung 31 des Backenträgers 30 gegen das Spannfutter die Stifte 33 jeweils starr, die Greifer 32 aber gegen die Kraft einer Rückstellfeder 34 nachgiebig verschiebbar am Backenträger 30 angeordnet. Wird daher der Backenträger 30 mit der Arbeitsseite B bei in seinen Greifern 32 gehaltenen Aufsatzbacken 3 gegen die Futterstirnseite 26 des noch nicht mit Aufsatzbacken bestückten Spannfutters zugestellt, so kommen zunächst die Aufsatzbacken 3 mit ihrer Verzahnung 6 in der Gegenverzahnung der Grundbacken 2 zur Auflage. Beim weiteren axialen Vorstellen des Backenträgers 30 können sich dann die Greifer 32 gegen die Rückstellkraft der Feder 34 relativ zum Backenträger 30 zurückschieben, während der Backenträger 30 mit den Stiften 33 sich selbst noch axial gegen das Spannfutter weiter vorbewegt, um die Stößel 24 über ihren gesamten, die Verriegelung bewirkenden Hub zu verstellen. Zur Abnahme der Aufsatzbacken 3 wird der Backenträger 30 gedreht und mit der Arbeitsseite A axial gegen die Futterstirnseite 26 zugestellt, wobei die Greifer 32 noch leer sind. Bei der axialen Zustellung erfassen die Greifer 32 zunächst die an den Grundbacken 2 noch verriegelten Spannbacken 3. Die Greifer 32 drücken sich dann gegen die Rückstellfeder 34 zurück, während wiederum beim weiteren Zustellen des Backenträgers 30 die Stifte 33 nun die anderen, der Entriegelung dienenden Stößel 24 an der linken Backenseite betätigen können. Die Aufsatzbacken 3 sind in den Greifern 32 zwischen unter Federkraft 35 stehenden Zangenarmen 32.1 gehalten, wobei die Aufsatzbacken 3 mit seitlichen Leisten 3.1 in entsprechende Nuten 32.2 der Zangenarme 32.1 fassen. Die Zangenarme 32.1, die Nuten 32.2 und die Leisten 3.1 sind so mit Schrägflächen 36 versehen, daß der Greifer 32 unter vorübergehendem Zusammendrücken der die Zangenarme 32.1 beaufschlagenden Feder 35 von den Aufsatzbacken 3 abgezogen werden kann, wenn die Aufsatzbacken 3 entweder an den Grundbacken 2 oder in einem ihrer Aufbewahrung dienenden, nicht dargestellten Backenmagazin gehalten sind, so daß sich der Greifer 32 selbsttätig von der Aufsatzbacke 3 lösen kann. Umgekehrt kann der Greifer 32 zum Erfassen einer Aufsatzbacke 3 in entgegengesetzter Richtung über die Aufsatzbacke 3 geschoben werden, wobei sich die Zangenarme 32.1 gegen die Kraft der Feder 35 aufspreizen, bis die Leisten 3.1 an den Nuten 32.2 der Zangenarme 32.1 zum Eingriff kommen.

## Patentansprüche

1. Kraftbetätigtes Spannfutter mit radial verstellbaren Spannbacken, deren jede aus einer in einem Futterkörper (1) geführten antreibbaren Grundbakke (2) und einer an der Stirnfläche der Grundbakke (2) angeordneten, an der Grundbacke (2) auswechselbar befestigten Aufsatzbacke (3) besteht und mindestens einen die Grundbacke (2) und die Aufsatzbacke (3) verbindenden Zapfen (7) mit zur Futterachse (8) paralleler Zapfenachse (9) aufweist, dadurch gekennzeichnet, daß der Zapfen (7) mit seinem einen, ein Gewinde (10) tragenden Zapfenende in einem Muttergewinde (11) der Grundbacke (2) geführt ist und am anderen Ende einen in einer Richtung quer zur Zapfenachse (9) schmaleren, in der dazu senkrechten Richtung breiteren und eine über den Zapfenschaft auswärts vorstehende Riegelschulter (14) bildenden Riegelkopf (12) aufweist, der in eine Riegelaufnahme (15) in der Aufsatzbacke (3) greift, wobei der Riegelkopf (12) in der dem Entriegelungszustand entsprechenden Drehlage des Zapfens (7) axial in die Riegelaufnahme (15) einsteckbar ist und in der dem Verriegelungszustand entsprechenden Drehlage mit seiner Riegelschulter (14) eine in der Riegelaufnahme (15) vorgesehene Hinterschneidung (16) axial formschlüssig hinterfaßt, daß ferner der Zapfen (7) in einem in der Grundbacke (2) befindlichen Zapfenabschnitt eine Verzahnung (10) nach Art eines Zahnritzels und ein quer zur Zapfenachse (9) längsverschieblich in der Grundbacke (2) geführter Stellbolzen (19) eine mit der Verzahnung (10) des Zapfens (7) kämmende Querverzahnung (21) nach Art einer Zahnstange aufweist, wobei die Länge des Stellbolzens (19) höchstens gleich der Breite der Grundbacke (2) in seiner Verschiebungsrichtung ist, und daß zum Verschieben des Stellbolzens (19) im Futterkörper (1) beidseits der Grundbacke (2) mit dem Stellbolzen (19) in seiner Verschiebungsrichtung fluchtende Stellstangen (23) längsverschieblich geführt sind, die mittels im Futterkörper (1) axial geführter und von außerhalb des Futterkörpers (1) her gegen die Kraft von Rückstellfedern (25) betätigbarer Stößel (24) verstellbar sind und dazu über Keilgetriebe (27) mit den Stößeln (24) im Eingriff stehen.

2. Spannfutter nach Anspruch 1, dadurch gekennzeichnet, daß in der dem Entriegelungszustand entsprechenden Drehstellung der Zapfen (7) die Stellbolzen (19) in die Führungen (22) für die Stellstangen (23) im Futterkörper (1) vorstehen.

3. Spannfutter nach Anspruch 1 oder 2, dadurch gekennzeichnet, daß die Riegelaufnahme (15) von einer sich in Verstellrichtung der Aufsatzbacke (3) an der Grundbacke (2) erstreckenden Nut (18) von T-förmigem Nutquerschnitt gebildet ist, wobei der querliegende Teil (18.1) des Nutprofils die Hinterschneidung der Riegelaufnahme (15) bildet.

4. Spannfutter nach den Ansprüchen 1 bis 3, dadurch gekennzeichnet, daß jede Spannbacke in der Verstellrichtung der Aufsatzbacke (3) an der Grundbacke (2) zwei mit Abstand nebeneinander angeordnete Zapfen (7) aufweist, wobei für jeden Zapfen (7) ein eigener Stellbolzen (19) mit eigenen Stellstangen (23) und Stößeln (24) vorgesehen ist.

5. Backenwechselvorrichtung für ein Spannfutter nach den Ansprüchen 1 bis 4, mit einem axial gegen die Stirnseite (26) des Spannfutters verstellbaren Backenträger (30) mit je einem Greifer (32) für die Aufsatzbacken (3), dadurch gekennzeichnet, daß der Backenträger (30) zwei Arbeitsseiten (A, B) mit je einem Satz Greifer (32) für die Aufsatzbacken (3) aufweist und wahlweise mit der einen oder anderen Arbeitsseite (A, B) gegen die Futterstirnseite (26) zustellbar ist, daß auf der einen Arbeitsseite (B) nur Stifte (33) zur Betätigung der dem Verriegeln der Zapfen (7) dienenden Stößel (24) jeweils an der einen Seite der Spannbacken und an der anderen Arbeitsseite (A) nur Stifte (33) zur Betätigung der dem Entriegeln der Zapfen (7) dienenden Stößel (24) an der anderen Seite der Spannbacken vorgesehen sind, und daß in Zustellrichtung des Backenträgers (30) gegen das Spannfutter die Stifte (33) jeweils starr, die Greifer (32) gegen eine Rückstellkraft (34) nachgiebig verschiebbar am Backenträger (30) angeordnet sind.

**Claims**

1. Power-operated chuck with radially adjustable chuck jaws, each of which consists of a drivable base jaw (2) guided in a fixture body (1) and of a top jaw (3), arranged against the face of the base jaw (2) and interchangeably attached to the base jaw (2), and has at least one pin (7) connecting the base jaw (2) and the top jaw (3), with a pin axis (9) parallel to the fixture axis (8), characterized in that the pin (7) is guided with one pin end, carrying a thread (10), in a nut thread (11) of the base jaw (2), and at the other end has a locking head (12) which is narrower in a direction transverse to the pin axis (9) and broader in the direction at right-angles thereto, and forms a locking shoulder (14) projecting outwards over the pin shaft, which locking head engages into a locking mounting (15) in the top jaw (3), whereby the locking head (12) is able to be inserted axially into the locking mounting (15) in the rotational position of the pin (7) corresponding to the unlocking state, and in the rotational position corresponding to the locking state catches to the rear with its locking shoulder (14) axially in a form-locking manner an undercut (16) provided in the locking mounting (15), that in addition the pin (7) in a pin section situated in the base jaw (2) has a toothing (10) in the manner of a pinion, and an adjustment bolt (19) guided transversely to the pin axis (9) so as to be longitudinally displaceable in the base jaw (2) has a transverse toothing (21) meshing with the toothing (10) of the pin (7) in the manner of a rack, whereby the length of the adjustment bolt (19) is at most equal to the width of the base jaw (2) in its displacement direction, and that for the displacement of the adjustment bolt (19) in the fixture body (1) on both sides of the base jaw (2) adjustment bars (23) are guided so as to be longitudinally displaceable, which are in alignment with the adjustment bolt (19) in its displacement direction, and are adjustable by means of driver rods (24) which are guided axially in the fixture body (1) and are able to be actuated from outside the fixture body (1) against the force of restoring springs (25), and for that purpose are in engagement with the driver rods (24) via wedge gears (27).

2. Chuck according to Claim 1, characterized in that in the rotational position corresponding to the unlocking state of the pins (7), the adjustment bolts (19) project into the guideways (22) for the adjustment bars (23) in the fixture body (1).

3. Chuck according to Claim 1 or 2, characterized in that the locking mounting (15) is formed from a groove (18) of T-shaped cross-section extending in the adjustment direction of the top jaw (3) on the base jaw (2), whereby the transverse part (18.1) of the groove profile forms the undercut of the locking mounting (15).

4. Chuck according to Claims 1 to 3, characterized in that each chuck jaw has two pins (7) arranged at a distance adjacent to each other in the adjustment direction of the top jaw (3) on the base jaw (2), whereby for each pin (7) its own adjustment bolt (19) with its own adjustment bars (23) and driver rods (24) is provided.

5. Jaw exchange device for a chuck according to Claims 1 to 4, with a jaw carrier (30), adjustable axially against the face (26) of the chuck, with in each case a gripper (32) for the top jaws (3), characterized in that the jaw carrier (30) has two operating sides (A, B) with in each case a set of grippers (32) for the top jaws (3) and is able to be placed selectively with one or other operating side (A, B) against the face (26) of the fixture, that on one operating side (B) only studs (33) are provided for actuation of the driver rods (24) serving to lock the pins (7) respectively on one side of the chuck jaws, and on the other operating side (A) only studs (33) are provided for actuation of the driver rods (24) serving to unlock the pins (7) on the other side of the chuck jaws, and that in the direction of placing the jaw carrier (30) against the chuck, the studs (33) are respectively arranged so as to be rigid, the grippers (32) so as to be flexibly displaceable against a restoring force (34) on the jaw carrier (30).

**Revendications**

1. Mandrin de serrage actionné mécaniquement, comportant des mâchoires de serrage déplaçables radialement, dont chacune est constituée par une mâchoire de base (2) pouvant être entraînée, qui est guidée dans un corps (1) du mandrin, et par une mâchoire rapportée (3) montée sur la face frontale de la mâchoire de base (2) et fixée de façon amovible sur cette mâchoire de base (2), et comporte au moins un téton (7) reliant la mâchoire de base (2) et la mâchoire rapportée (3) et possédant un axe (9) parallèle à l'axe (8) du mandrin, caractérisé en ce que le téton (7) est guidé, par son extrémité portant un filetage (10), dans un taraudage (11) de la mâchoire de base (2) et comporte, sur son autre extrémité, une tête de verrouillage (12), qui est plus étroite dans une direction transversale par rapport à l'axe (9) du téton, est plus large dans une direction perpendiculaire à la direction précédente, forme un épaulement de verrouillage (14) faisant saillie vers l'extérieur au-dessus de la tige du téton et s'engage dans un logement de verrouillage (15) ménagé dans la mâchoire rapportée (3), auquel cas la tête de verrouillage (12) peut être enfichée axialement dans le logement de verrouillage (15), lorsque le téton (7) est dans la position de rotation correspondant à l'état déverrouillé et, dans la position de rotation correspondant à l'état verrouillé, s'engage axialement par son épaulement de verrouillage (14), selon une liaison par formes complémentaires dans une partie en contre-dépouille (16) prévue dans le logement de verrouillage (15), qu'en outre le téton (7) comporte, dans une section située dans la mâchoire de base (2), une denture (10) réalisée à la manière d'un pignon, et qu'une tige filetée de réglage (19) guidée dans la mâchoire de base (2) de manière à avoir un déplacement longitudinal transversalement par rapport à l'axe (9) du téton comporte une denture transversale (21) réalisée à la manière d'une crémaillère et engrenant avec la denture (10) du téton (7), la longueur de la tige filetée de réglage (19) dans sa direction de déplacement étant égale au maximum à la largeur de la mâchoire de base (2), et que pour le déplacement de la tige filetée de réglage (19) dans le corps (1) du mandrin, des barres de réglage (23) alignées avec la tige filetée de réglage (19) dans sa direction de déplacement sont guidées des deux côtés de la mâchoire de base (2) de manière à être déplaçables longitudinalement, lesquelles barres peuvent être déplacées au moyen de poussoirs (24) guidés axialement dans le corps (1) du mandrin et pouvant être actionnés depuis l'extérieur du corps (1) du mandrin à l'encontre de la force de ressorts de rappel (25), et, à cet effet, sont en prise avec les poussoirs (24) par l'intermédiaire de mécanismes à clavettes (27).

2. Mandrin de serrage selon la revendication 1, caractérisé en ce que lorsque le téton (7) est dans la position de rotation correspondant à l'état déverrouillé, la tige filetée de réglage (19) pénètre dans les guides (22) prévus pour les barres de réglage (23) dans le corps (1) du mandrin.

3. Mandrin de serrage selon la revendication 1 ou 2, caractérisé en ce que le logement de verrouillage (15) est formé par une rainure (18) qui s'étend dans la direction de déplacement de la mâchoire rapportée (3) sur la mâchoire de base (2) et possède une section transversale en forme de T, la partie transversale (18.1) du profil de la rainure formant la partie en contre-dépouille du logement de verrouillage (15).

4. Mandrin de serrage selon l'une quelconque des revendications 1 à 3, caractérisé en ce que chaque mâchoire de serrage possède, dans la direction de déplacement de la mâchoire rapportée (3) sur la mâchoire de serrage (2), deux tétons (7) disposés l'un à côté de l'autre à une certaine distance, une tige filetée particulière de réglage (19) munie de barres particulières de réglage (23) et de poussoirs particuliers (24) étant prévue pour chaque téton (7).

5. Dispositif de changement de mâchoires pour un mandrin de serrage selon les revendications 1 à 4, comportant un porte-mâchoires (3) déplaçable axialement en direction de la face frontale (26) du mandrin de serrage et comportant des dispositifs respectifs de saisie (32) pour les mâchoires rapportées (3), caractérisé en ce que le porte-mâchoires (30) comporte deux faces de travail (A et B) possédant chacune un ensemble de dispositifs de saisie (32) pour les mâchoires rapportées (2), et au choix l'une ou l'autre des faces de travail (A, B) du porte-mâchoires peut être approchée de la face frontale (26) du mandrin, que sur une face de travail (B), seules sont prévues des broches (33) servant à actionner les poussoirs (24) utilisés pour verrouiller le téton (7), respectivement sur un côté des mâchoires de serrage et, sur l'autre face de travail (A), seules sont prévues des broches (33) servant à actionner les poussoirs (24) servant à déverrouiller les tétons (7), sur l'autre côté des mâchoires de serrage, et que dans la direction de rapprochement du porte-mâchoires (30) vers le mandrin de serrage, les broches (33) sont montées respectivement rigidement et les dispositifs de saisie (32) sont montés de manière à être déplaçables élastiquement à l'encontre d'une force de rappel (34), sur le porte-mâchoires (30).

EP 0 195 184 B1

Fig. 1

Fig. 2

32.1

3.1

6

2

14

16

15

7

12

18

18.2

3

18

14

18.1

16

18

1

3.1

32.1

Fig. 3

Fig. 4

Seite „B"

Seite „A"

4

Fig. 5